# EUROPEAN PATENT SPECIFICATION

(11) **EP 1 226 687 B1**
(45) Date of publication and mention of the grant of the patent: **24.05.2006**
(21) Application number: 00972302.4
(22) Date of filing: 20.10.2000
(51) Int. Cl.: H04L 12/46, H04L 12/28, H04L 29/06

(54) **Establishing dynamic tunnel access sessions in a communication network**
Herstellung dynamischer Sitzungen zum Tunnelzugriff in einem Kommunikationsnetzwerk
Etablissement des sessions d'accès direct par tunnel dans un réseau de communication

(30) Priority: 22.10.1999 US 160890 P
(43) Date of publication of application: 31.07.2002
(73) Proprietor: Nomadix, Inc., Westlake Village, California 91361 (US)
(72) Inventor: SHORT, Joel, E., Los Angeles, CA 90049 (US)
(74) Representative: MacDougall, Donald Carmichael
(86) International application number: PCT/US2000/029069
(87) International publication number: WO 2001/031855

(56) References cited:
- EP-A- 0 917 318
- WO-A-98/57465
- MALKIN GARY SCOTT: "DIAL-IN VIRTUAL PRIVATE NETWORKS USING LAYER 3 TUNNELING" 2 November 1997 (1997-11-02) , PROCEEDINGS OF THE CONFERENCE ON LOCAL COMPUTER NETWORKS, XX, XX, PAGE(S) 555-561 XP002084438 the whole document
- "Layer 2 Tunneling Protocol" INTERNET, [Online] 1998, XP002175643 Retrieved from the Internet: <URL:www.cisco.com> [retrieved on 2001-08-22]
- "Detailed Scenario for Access VPDN Dial-in Using L2TP" INTERNET, [Online] 1998, XP002175644 Retrieved from the Internet: <URL:www.cisco.com> [retrieved on 2001-08-22]

## Description

### FIELD OF THE INVENTION

The present invention relates generally to managing a communications network and, more particularly, to methods and apparatus for dynamically establishing tunnel access sessions at a network device within a communications network.

### BACKGROUND OF THE INVENTION

While desktop computers generally remain a part of the same network for a substantial period of time, laptops or other portable computers are specifically designed to be transportable. As such, portable computers are connected to different networks at different times depending upon the location of the computer. In a common example in which the portable computer serves as an employee's desktop computer, the portable computer is configured to communicate with their employer's network, i.e., the enterprise network. When the employee travels, however, the portable computer may be connected to different networks that communicate in different manners. In this regard, the employee may connect the portable computer to the network maintained by an airport or by a hotel in order to access the enterprise network, the internet or some other on-line service. Since these other networks are configured somewhat differently, however, the portable computer must also be reconfigured in order to properly communicate with these other networks. Typically, this configuration is performed by the user/subscriber each time that the portable computer is connected to a different network. As will be apparent, this repeated reconfiguration of the portable computer is not only quite time consuming, but is also prone to errors. Further, the user/subscriber is often required to have specific software running on the portable computer in order to communicate with the enterprise network, though such communications may be in conflict with the network over which the portable computer must transfer data to reach the enterprise network.

A gateway device serves as an interface connecting the user/subscriber to a number of networks or other online services. For example, the gateway device can serve as a gateway to the Internet, the enterprise network, or other networks and/or on-line services. In addition to serving as a gateway, the gateway device automatically adapts to the protocols and other parameters of the host, in order that it may communicate with the new network in a manner that is transparent both to the user/subscriber and the new network. Once the gateway device has appropriately adapted to the user's host, the host can appropriately communicate via the new network, such as the network at a hotel, at home, at an airport, or any other location, in order to access other networks, such as the enterprise network, or other online services, such as the internet.

The user/subscriber, and more specifically the remote or laptop user, benefits from being able to access a myriad of networks without having to undergo the time-consuming and all-too-often daunting task of reconfiguring their host in accordance with network specific configurations. In this fashion, the gateway device is capable of providing more efficient network access to the user/subscriber. A gateway device is also instrumental in providing the user/subscriber broadband network access that can be tailored to the user/subscriber's needs. In many instances the remote user/subscriber is concerned with being able to acquire network access to their home or enterprise network, which are most typically protected by a firewall. The firewall prevents unauthorized access to the enterprise network through a general Internet connection, such as through an Internet service provider. While some access is possible from outside the firewall, such as inbound electronic mail, access to corporate resources such as network databases and application programs are generally not made accessible to hosts located outside the firewall unless the user/subscriber has an active account with a valid username and password combination.

Moreover, as appreciated by those of ordinary skill in the art, different network protocols may be used within the Internet infrastructure and within enterprise networks that pose potential access problems for the remote user. For example, an Internet Protocol (IP) is typically used at the network protocol level to send data through the Internet. An enterprise network, on the other hand, may use any one of a variety of network protocols including IP, IPX, Appletalk, etc. If the IP protocol and the enterprise network protocol are incompatible, then the remote user may be prevented from accessing resources on the enterprise network. Additionally, when a remote user attempts to access the enterprise network through the Internet, typically through an Internet service provider, the remote user is dynamically assigned an IP address. This IP address identifies the host user/subscriber and allows IP packets to be properly routed from and to the host. However, the remote user may be denied access by the firewall of the enterprise network because the IP address assigned by the Internet service provider is not one of the authorized addresses in the corporate network.

In response to these and other problems associated with granting remote access to an enterprise network over the Internet, several techniques have been developed for creating virtual private networks (VPN), wherein a remote node of a single network is interconnected using a publicly accessible communication medium. For example, there are a number of systems that enable user/subscribers to create virtual networks using the Internet as a medium for transporting data between the enterprise network and a remote user. These systems often times include encryption and other security mechanisms to ensure that only authorized users can access the virtual network, and that the data cannot be intercepted.

The most common technique for constructing a VPN is by implementing tunnelling. Tunnelling works by encapsulating or wrapping a packet or a message from one network protocol in the protocol of another. The encapsulated packet is transmitted over the network via the protocol of the wrapper. This method of packet , transmission avoids protocol restrictions, and enables remote users to have seamless access to their enterprise network without any apparent effects from accessing their enterprise network over another network having a different protocol. Several relatively well known tunnelling protocols include Microsoft's PPTP, Cisco's Layer Two Forwarding (L2F) protocol, and IETF's L2TP which is a hybrid of L2F and PPTP. Another technique that uses tunnelling is the point-to-point protocol encapsulation that is described in EP 0,917,318. Yet another tunnably technique is described in the article "Dial-in Virtual Private Networks Using Layer 3 Tunnably by Gay Scott Malkin, IEEE 1997, November. While these and other tunnelling techniques have some merit, no one single tunnelling protocol provides for automated configuration without the need for special client-side (i.e., remote computer) software.

Therefore, an unsatisfied need exists in the industry for a system method that dynamically creates subscriber tunnels automatically and without the need for a preestablished relationship between an Internet access point and a remote enterprise network.

### SUMMARY OF THE INVENTION

The present invention comprises a method and apparatus for implementing dynamic tunnel access sessions at a network device within a communications network. Various aspects are defined in the independent claims. Some preferred features are defined in the dependent claims. The tunnel access sessions are created between a network device, typically a gateway device and a network service, such as the Internet or a corporate intranet and provide for transparent tunnel access sessions for the user/subscribers who access the communications network via the network device. The present invention does not require special client-side software to be loaded on the remote host of the subscriber, and does not require any manual configuration of the remote host. Instead, the gateway device establishes a tunnel, whereby the gateway device operates as one end point and the enterprise network operates as the other end point. Rather than configuring and reconfiguring the remote host each time a tunnel access session is created, the remote host provides the gateway device with the appropriate subscriber profile information necessary to establish a tunnel access session to a particular network service. Thereafter, the gateway device accesses the subscriber profile information each time a tunnel access session is warranted for that subscriber to access the network service. In essence, the gateway device takes the place of the remote host as an end point of the tunnel, spoofing the network service. The tunnel access session that is established from the gateway device to the network service is such that the network service views the gateway device as though it were the remote host. By allowing the gateway device to operate as the end point of the tunnel, the remote host is not limited to a single tunnel per session, but may have numerous tunnel access sessions established simultaneously during a single log-on session.

### BRIEF DESCRIPTION OF THE DRAWINGS

Figure 1 is block diagram of a communication network that provides for the dynamic establishment of tunnels for communication between a remote host and a network service, in accordance with an embodiment of the present invention.
Figure 2 is a block diagram of a communications network that provides for the dynamic establishment of two simultaneous tunnel sessions, in accordance with an embodiment of the present invention.
Figure 3 is a flowchart diagram of a method for creating and managing tunnels in a communications network, in accordance with an embodiment of the present invention.

### DETAILED DESCRIPTION OF THE PREFERRED EMBODIMENTS

The present invention now will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

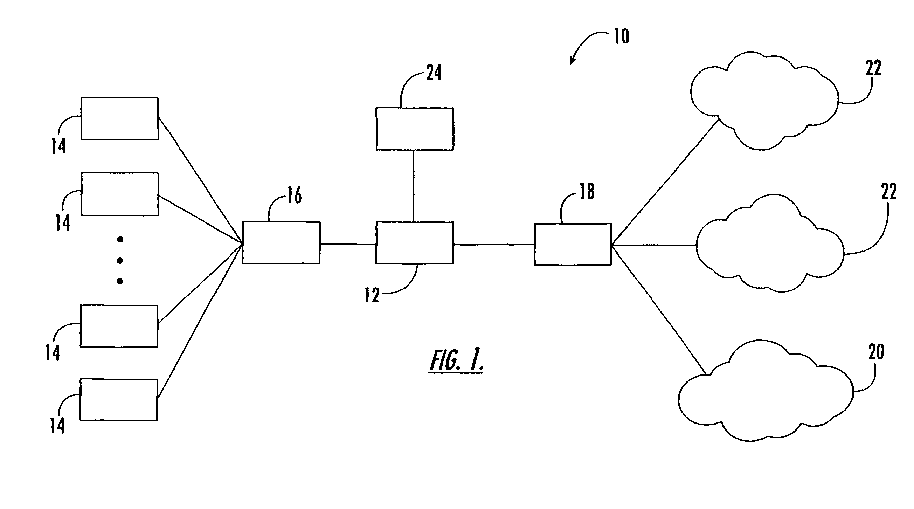

Referring now to Figure 1, the communications network **10** that includes a gateway device **12** is depicted in block diagram form. The network system typically includes a plurality of user/subscriber hosts **14** that access the network in order to gain access to other networks or other online services. For example, the hosts can be in communication with ports that are located in different rooms of a hotel, a multi-dwelling residence or an office building. Alternatively, the hosts can in communication with ports in an airport, an arena, or the like. The communication network also includes a gateway device that provides an interface between the plurality of hosts and the various networks or other online services. Most commonly, the gateway device is located near the hosts at a relatively low position in the structure of the overall network. (i.e. the gateway will be located within the hotel, multi-unit residence, airport, etc.) However, the gateway device can be located at a higher position in the overall network structure such as at a Point of Presence (PoP) of Network Operating Center (NOC), if so desired. Although the gateway device can be physically embodied in many different fashions, the gateway device typically includes a controller and a memory device in which software is stored that defines the operational characteristics of the gateway device. Alternatively, the gateway device can be embedded within another network device, such as the access controller or a router, or the software that defines the functioning of the gateway device can be stored on a PCMCIA card that can be inserted into the host in order to automatically reconfigure the host to communicate with a different communications network.

The network system **10** also typically includes an access controller **16** positioned between the hosts **14** and the gateway device **12** for multiplexing the signals received from the plurality of hosts onto a link to the gateway device. Depending upon the medium by which the hosts are connected to the access controller, the access controller can be configured in different manners. For example, the access controller can be a digital subscriber line access module (DSLAM) for signals transmitted via regular telephone lines, a cable modem termination system (CMTS) for signals transmitted via coaxial/optical fiber cables, a wireless access point (WAP) for signals transmitted via a wireless network, a switch or the like. As also shown in Figure 1, the network system typically includes one or more routers **18** and/or servers (not shown in Figure 1) in communication with a plurality of networks **20** or other online services **22.** While the communication network is depicted to have a single router, the communication network can have a plurality of routers, switches, bridges, or the like that are arranged in some hierarchical fashion in order to appropriately route traffic to and from the various networks or other online services. In this regard, the gateway device typically establishes a link with one or more routers. The routers, in turn, establish links with the servers of other networks or other online service providers, such as internet service providers, based upon the subscriber's selection.

The gateway device **12** is specifically designed to configure hosts **14** that log onto the network **10** in a manner that is transparent to the subscriber. In the typical network that employs dynamic host configuration protocol (DHCP) service, the DHCP server **24** will initially assign an IP address to a host that is logging onto the network through communication with the gateway device. While illustrated as a separate device from the gateway device **12,** the DHCP server **24** may be incorporated into the physical embodiment housing the gateway device. Upon opening their web browser or otherwise attempting to access an on-line service, the gateway device will typically direct the subscriber to enter the ID and password corresponding to the desired on-line service that the subscriber is attempting to access. The gateway device then determines if the subscriber is entitled to access the service, the level of access and/or the type of services to which the subscriber is entitled according to an Authentication, Authorization and Accounting (AAA).

An AAA server, which is a database of subscriber records, may be remote to the gateway device or the AAA database may be incorporated into the physical embodiment housing the gateway device. Assuming that the subscriber has been authenticated and has authorization, the gateway device typically presents new subscribers with a home page or control panel that identifies, among other things, the online services or other networks that are accessible via the gateway device. In addition, the home page presented by the gateway device can provide information regarding the current parameters or settings that will govern the access provided to the particular subscriber. As such, the gateway administrator can readily alter the parameters or other settings in order to tailor the service according to their particular application. Typically, changes in the parameters or other settings that will potentially utilize additional resources of the network system will come at a cost, such that the gateway administrator will charge the subscriber a higher rate for their service (e.g. increased bandwidth).

The home page also permits the subscriber to select the network **20** or other online service **22** that the subscriber wishes to access. For example, the subscriber can access the enterprise network on which the host is customarily resident. Alternatively, the subscriber can access the internet or other on-line services. Once the subscriber elects to access a network or other online service, the gateway device establishes an appropriate link or tunnel to the desired network or online service, as discussed in detail below.

Thereafter, the subscriber can communicate freely with the desired network **20** or other online service **22.** In order to support this communication, the gateway device **12** generally performs a packet translation function that is transparent to the user/subscriber. In this regard, for outbound traffic from the host **14 to** the network or other on-line service, the gateway device changes attributes within the packet coming from the user/subscriber, such as the source address, checksum, and application specific parameters, to meet the criteria of the network to which the user/subscriber has accessed. In addition, the outgoing packet includes an attribute that will direct all incoming packets from the accessed network to be routed through the gateway device. In contrast the inbound traffic from the network or other online service that is routed through the gateway device undergoes a translation function at the gateway device so that the packets are properly formatted for the user/subscriber's host. In this manner, the packet translation process that takes place at the gateway device is transparent to the host, which appears to send and receive data directly from the accessed network.

By implementing the gateway device as an interface between the user/subscriber and the network or other online service the user/subscriber will eliminate the need to re-configure their host **14** upon accessing subsequent networks.

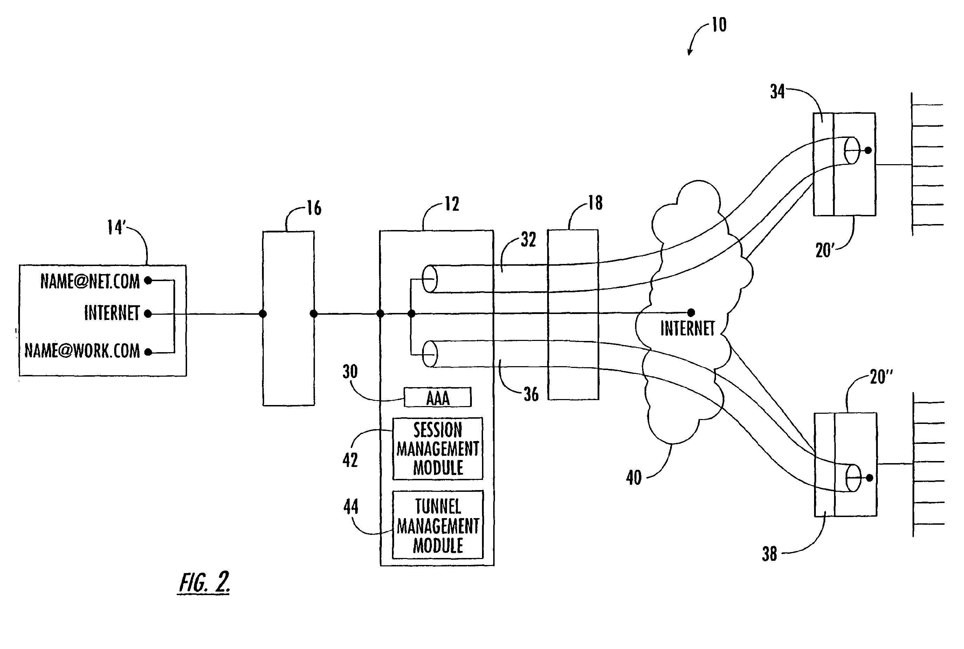

In accordance with an embodiment of the present invention, the dynamic establishment and management of subscriber-transparent tunnels in a communication system **10** is depicted in the schematic diagram of FIG 2. As illustrated in FIG. 2, a gateway device **12,** provides automatic configuration of tunnels without the need for specialized client-side software on host **14'.** Thus, the establishment of the tunnels at the network device is transparent to the subscriber. Multiple subscribers who communicate with the gateway device and are qualified for access to the network or online service that the tunnel communicates with may implement the tunnel simultaneously. Further, the gateway device **12** enables a single user/subscriber to establish two or more tunnels simultaneously since the tunnels do not depend upon a particular configuration on the user/subscriber host **14'.**

A user/subscriber initially sets up an account with gateway device **12** via a web browser interface, wherein the user/subscriber enters various user unique data, including that which is necessary for establishing connections to the networks and/or online services that the user/subscriber wishes to gain access. Typically, for each network that the user/subscriber desires access to a request will be forwarded to the user/subscriber querying them to enter authorization information (such as a user name, network access identifier, and password). The information entered by the user/subscriber will be used to create a profile that will be stored in the authorization file in the AAA module 30 of the gatway device **12.** These user-specific profiles will then in turn be used by the network device in determining whether a tunnel will be created when a user/subscriber requests access. The user/subscriber will be provided with the capability to add, delete and/or modify his or her profile, including the information for establishing tunnels. Additionally, the network device administrator may provision for a tunneled connection for a user/subscriber by modifying the user/subscriber profile in the AAA module. A group of user/subscribers is typically provided tunneled connections by modifying a group profile in a database table that may be internal or external to the network device. The network device administrator may use Lightweight Directory Access Protocol (LDAP) or a similar communication link to implement the modifications to group profiles.

While the AAA module **30** is illustrated as an integral component of the **gateway** device **12,** it is noted that the AAA module **30** may be disposed in a remote location, central to and accessible by a plurality of network devices that implement the establishment of subscriber-transparent tunneling. For instance, a plurality of network devices may be utilized by a regional or national chain of hotels providing seamless network access to the occupants of the various rooms in the hotels.

At the beginning of a new network access session by the user/subscriber, the user/subscriber logs onto the gateway device **12** by entering his or her account user name and password. The user/subscriber can then select access to one or more of the networks and/or online services available through gateway device **12.** For example, as illustrated in FIG. 2, the user/subscriber of host 14' has simultaneously established access to three separate networks, two of which are being accessed through unique tunnels. A first tunnel **32** provides access to network **20'.** The tunnel **32** was established when the user/subscriber requested access to network service **20',** typically from a web browser interface, which caused a setup notification packet to be sent from the user/subscriber host **14'** to the gateway device **12.** The network device **12** identifies the packet as originating from the user/subscriber by cross-referencing a specific subscriber identifier, typically the MAC address of the packet, the IP address or the originating port identifier with the corresponding authorization table in the AAA module **30.** By referencing the subscriber identifier in the packet with the profile of the user/subscriber (where the user/subscriber provided a list of networks for access via a tunnel), the gateway device **12** can determine if a tunnel is needed to provide the user/subscriber with access to the network service **20'.** If a tunnel is not needed, then the user/subscriber is provided with standard network access. However, if a tunnel is needed, the tunnel management module **44** of the gateway device **12** determines if a tunnel to the network service **20'** has already been established, and if so, places the packet in the existing tunnel. If a tunnel does not exist, then the tunnel management module **44** establishes a tunnel utilizing the profile information provided by the user/subscriber during account creation and/or subsequent modification. If the user/subscriber did not provide all the necessary information to establish the tunnel connection because, for example, concern over security of the information, the user/subscriber is presented with a request for additional information via a web page or via an information and control console panel on the host that requests the missing information.

The tunnel management module **44** contacts the network service **20'** in order to establish tunnel access to the network service **20',** typically through a firewall **34** or other secure access server. Using the authorization information provided when the user/subscriber initially set up his or her account (e.g., such as a user name, network access identifier, and password), the gateway device **12** is given access to network service **20',** assuming the network service **20'** authenticates and accepts the connection. The resulting tunnel established by the tunnel management module **44** is between the gateway device **12** and the network service **20'** and may be implemented by any suitable tunneling protocol supported by the network service **20',** such as L2TP, PPTP or PPPoE. From the server-side perspective of the network service **20',** the fact that the tunnel terminates at the gateway device **12** rather than at the user/subscriber host **14'** is undetectable. The gateway device **12** essentially spoofs the network service **20'** to believing that the tunnel extends all the way to an end point at the user/subscriber host **14'.** However, since the end point is at the gateway device **12** rather than the user/subscriber host **14',** multiple tunnels can be established simultaneously during a single session because the tunnels are not dependent upon the configuration of specific software at the user/subscriber host **14**'. In addition, the tunnel management module **44** of the gateway **device 12** is able to dynamically create a tunnel on behalf of a user/subscriber utilizing the network log-on information provided by the user/subscriber. The session management module **42** manages the access sessions of each subscriber who accesses the communication network through the network device, recording information about the sessions as desired. The session management module provides for tables of routes and services available to one or more subscribers in the communications network. The tables provide the impetus to match a given subscriber's authorized services/networks with those that require tunneled communication.

As illustrated in FIG. 2, a second tunnel **36** is established on behalf of the user/subscriber for providing access to the network service **20"** through firewall **38.** The tunnel **36** can be established in substantially the same manner as described above with regard to tunnel **32.** In addition, the user/subscriber may be given access to other networks and/or online services that do not require a tunnel connection, such as the worldwide web portion of the Internet **40.**

As previously mentioned, the user/subscriber host **14'** does not require any specific client-side software for accessing the network services **20', 20",** but only requires a standard communication protocol for communicating with the gateway device **12,** such as TCP/IP. Once established, the tunnels **32, 36** can receive data packets from the individual networks in virtually any protocol. This is made possible by the network device decapsulating the data packets as they exit a tunnel in preparation for transmission to the subscriber host. The tunnels can be terminated by an express command of the network service **20', 20"** or the user/subscriber host **14'.** Alternatively, the tunnels may timeout if they are not utilized within a certain predetermined period of time.

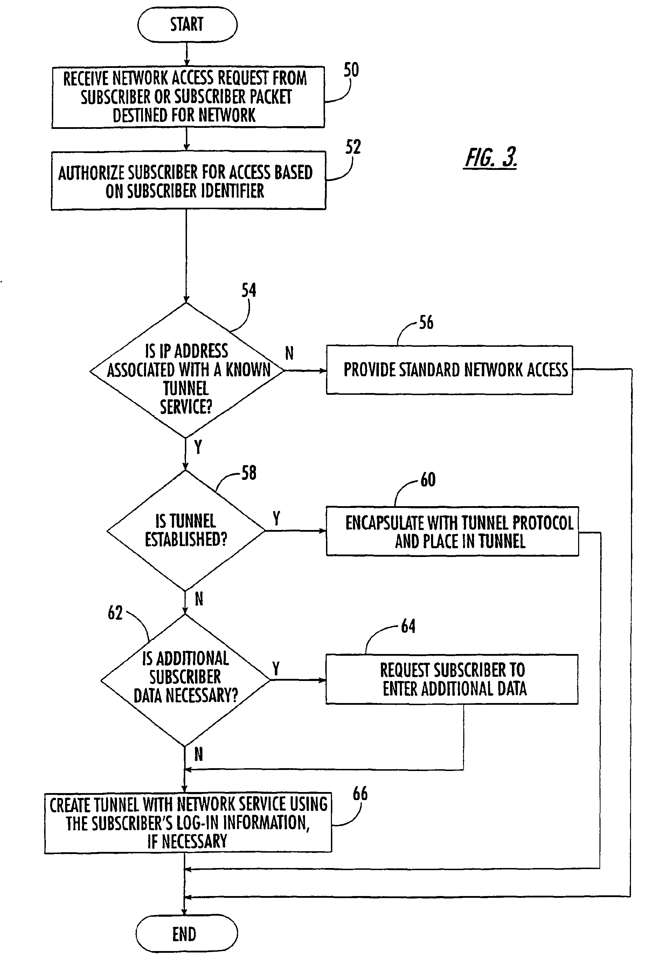

With reference to FIG. 3, a flowchart diagram of a methodology of tunnel management in accordance with the environment of the present invention is illustrated. At block **50,** the network device receives a packet destined for a tunneled service or an explicit network access request from a user/subscriber. The network access request may come from a user/subscriber's manual input of access request data (i.e. username, password, etc.) or the information may be stored in memory within the user/subscriber's host with the access request being generated automatically. Once the packet or request is received at the network device the user/subscriber is then authorized for network access by utilizing a subscriber identifier in the header of the network access request packets to look up the user/subscriber's profile in the AAA module, as indicated by block **52.** At block **54,** within the tunnel management module of the network device, a determination is made to ascertain if the destination IP address of the packet being sent from the user/subscriber is associated with an network service which requires a tunnel for access. If the destination IP address does not require a tunnel for access, then the user/subscriber is provided with standard network access, as indicated by block 56.

If the tunnel management module determines that the destination IP address is associated with a network service that requires tunneling for that particular subscriber, then it is determined at block **58** if a tunnel has already been established. If a tunnel has been established, then, at block **60,** the packet is encapsulated using the tunnel protocol appropriate for that network service, and any other translation or routing instructions that may pertain to data packet is undertaken. Once the encapsulation/translation of the packet is completed it is placed in the tunnel for delivery to the network service.

If the tunnel management module determines at block **58** that a tunnel has not yet been established for the requested network, then it is determined at block **62** if additional subscriber data not provided for in the AAA module subscriber profile is necessary to log into the network service for establishing a tunnel between the network service and the gateway device. If additional subscriber data is necessary, then, at block **64,** a subscriber data request packet is sent from the gateway device to the user/subscriber. The data request may take the form of an information and control panel displayed on the host of user/subscriber or the user/subscriber may be directed to a web page or a similar data request method may be used.

If no additional subscriber data is needed or once subscriber data is obtained, then a tunnel is created with the destination network using the subscriber's network log-in information, if necessary. The tunnel is created with the gateway device as one end point and the destination network as the other end point as indicated by block **66.** Once the tunnel is created packets being received from the user/subscriber and destined for the destination network will be encapsulated with tunnel protocol and placed in the tunnel. The existence of the tunnel insures that packets coming from the network service are routed through the gateway device prior to delivery to the user/subscriber. The gateway device will decapsulate packets coming through the tunnel from the network service prior to transmitting the packets to the user/subscriber.

## Claims

1. A method for dynamically creating a tunnel in a communications network to provide subscribers host access to a network service, comprising:
storing a subscriber profile in a network database, wherein the subscriber profile includes subscriber-specific network service tunnelling requirements for a plurality of network services (20', 20") that are available to the subscriber, including information for identifying tunnel requirements for each of those services;
establishing a subscriber network session between a gateway device (12) and the subscriber host;
receiving at the gateway device (12) a first service access request associated with a first network service (20'), the first service access request being received at any point in time during the on-going subscriber network session;
identifying the first service access request as originating from the subscriber;
accessing the subscriber profile in response to the receipt of the first service access request;
determining, based on the subscriber-specific network service tunnelling requirements in the accessed subscriber profile, whether the first network service (20') has a subscriber-specific tunnelling requirement, and
creating a first tunnel (32) if a determination is made that the subscriber profile requires the first tunnel, wherein the first tunnel (32) has a first end point at the gateway device and a second end point at the first network service,
**characterised in that** the gateway device (12) spoof the first network service (20) to believed that the tunnel extends to an end point at the subscriber host (14) by changing source addresses within packets coming from the subscriber host (14) and destination addresses within packets coming from the first network service (20')

2. The method of Claim 1, wherein storing a subscriber profile comprises storing at least one parameter chosen from the group consisting of the network access identifier, a user/subscriber name and a user/subscriber password.

3. The method of Claim 1 or Claim 2, further comprising determining if a first tunnel between the gatway device (12) and the first network service (20') pre-exists prior to creating the tunnel between the gateway device (12) and the first network service (20').

4. The method of any of the preceding Claims wherein more than one subscriber accessing the communication network through the gateway device (12) can simultaneously transmit data packets to the first network service (20') via the first tunnel (32).

5. The method of any of the preceding Claims, wherein the method further comprises:
receiving at the gateway device (12) a second service access request associated with a second network service (20"), the second service access request being received at any point in time during an on-going subscriber network session;
identifying the second service access request as originating from the subscriber (14);
accessing the subscriber profile in response to the receipt of the second service access request;
determining, based on the subscriber-specific network service tunnelling requirements in the accessed subscriber profile, whether the second network service has a subscriber-specific tunnelling requirement; and
creating a second tunnel if a determination is made that the subscriber profile requires the second tunnel, wherein the second tunnel has a first end point at the gateway device (12) and a second end point at the second network service (20").

6. The method of Claim 5, further comprising determining if a second tunnel between the gatway device (12) and the second network service (10") pre-exists prior to creating the tunnel (36) between the gateway device (12) and the second network service (20").

7. The method of Claim 5 or Claim 6, wherein the second tunnel (36) is functional simultaneous with the functioning of the first tunnel (32).

8. The method of Claim 5, wherein more than one subscriber accessing the communication network through the gateway device (12) can simultaneously transmit data packets to the first network service (20') via the first tunnel (32) and the second network service (20") via the second tunnel 36.

9. A system for dynamically creating a tunnel in a communications network to provide a subscriber host access to a destination network, comprising:
a storage device that stores a subscriber profile, wherein the subscriber profile includes subscriber-specific network service tunnelling requirements for a plurality of network services that are available to the subscriber, including information for identifying tunnel requirements for each of those services;
means for establishing a subscriber network session between a gateway device (12) and the subscriber host (14);
means for receiving at the gateway device (12) a first service access request associated with a first network service (20') at any point in time during an on-going subscriber network session;
means for identifying the first service access request as originating from the subscriber;
means for accessing the subscriber profile in response to the receipt of the first service access request;
means for determining, based on the subscriber-specific network service tunnelling requirements in the accessed subscriber profile, whether the first network service (20') has a subscriber-specific tunnelling requirement; and
means for creating a first tunnel (32) if a determination is made that the subscriber profile requires the first tunnel, wherein the first tunnel has a first end point at the gateway device and a second end point at the first network service (20') **characterised in that** the gateway device (12) is operable to spoof the first network service (20) to believed that the tunnel extends to an end point at the subscriber host (14) by changing source addresses within packets coming from the subscriber (14) and destination addresses within packets coming from the first network service (20).

10. The system of Claim 9, further comprising a means for determining if a first tunnel (32) between the gateway device (12) and the first network service (20') pre-exists prior to creating the tunnel (32) between the gateway device (12) and the first network service (20').

11. The system of Claim 9, further comprising:
means for receiving at the gateway device (12) a second service access request
associated with a second network service (20"), the second subscriber service access request being received at any point in time during an on-going subscriber network session;
means for identifying the second service access request as originating from the subscriber;
means for accessing the subscriber profile in response to the receipt of the second service access request;
means for determining, based on the subscriber-specific network service tunnelling requirements in the accessed subscriber profile, whether the second network service has a subscriber-specific tunnelling requiremept; and
means for creating a second tunnel (36) if a determination is made that the subscriber profile requires the second tunnel, wherein the second tunnel (36) has a first end point at the gateway device (12) and a second end point at the second network service (20").

12. A gateway device (12) that dynamically creates a tunnel in a communications network to provide a subscriber host access to a destination network, comprising:
means for establishing a subscriber network session between the gateway device (12) and the subscriber host (14); and
a processor that receives from a subscriber, at any point in time during an on-goin subscriber network session, a service access request associated with a network service (20) and identifies the service access request as originating from the subscriber (14);
a database accessed by the processor that stores a subscriber profile that includes subscriber-specific network service tunnelling requirements for a plurality of network services that are available to the subscriber, including information for identifying tunnel requirements for each of those services;
a tunnel management module implemented by the processor that communicates with the database, during the on-going subscriber network session, to determine if the subscriber requires a tunnel (32) for access to the requested network service and, if a determination is made that the tunnel is required, the tunnel management module creates a service access session between the network device and the network service, **characterised in that** the gateway device is operable to spoof the first network service (20) to believed that the tunnel extends to an end point at the subscriber host (14) by changing source addresses with packets coming from the suscriber host (14) and destination addresses with packets coming from the first network service (20).

13. The gateway device of Claim 12, further comprising a session management module implemented by the processor that communicates with the database to manage the network access session provided by the network device.

14. The gateway device of Claim 12, wherein the tunnel management module determines if a tunnel between the gateway device and the network service pre-exists prior to creating the tunnel between the gateway device and the network service.

15. The gateway device of Claim 12, wherein the tunnel management module is capable of creating more than one network access session for simultaneous subscriber access to more than one network service.

16. The gateway device of Claim 12, wherein the tunnel management module is capable of providing simultaneous access to the network access session to more than one subscriber accessing the communication network through the gateway device (12).

17. The gateway device of Claim 16, further comprising a session management module implemented by the processor that communicates with the database to manage the simultaneous network access session provided to more than one subscriber accessing the communication network through the gateway device.

18. The gateway device of Claim 16, wherein the subscriber profile defines subscriber-specific network service tunnelling requirements for a plurality of network services that the subscriber has been authorized to access.

19. The gateway device of Claim 18, wherein the subscriber-specific network service tunnelling requirements are predefined by the subscriber.

20. The gateway device of Claim 18, wherein the subscriber-specific network service tunnelling requirements are predefined by the gateway device administrator.

## Patentansprüche

1. Verfahren zur dynamischen Schaffung eines Tunnels in einem Kommunikationsnetz, um einem Teilnehmer-Host den Zugang zu einem Netzdienst zu ermöglichen, mit den folgenden Schritten:
Speichern eines Teilnehmerprofils in einer Netzdatenbank, wobei das Teilnehmerprofil teilnehmerspezifische Netzdienst-Tunnelungsanforderungen für mehrere Netzdienste (20', 20") enthält, die dem Teilnehmer zur Verfügung stehen, einschließlich Informationen zum Identifizieren der Tunnelanforderungen für jeden dieser Dienste;
Herstellen einer Teilnehmernetzsitzung zwischen einer Gateway-Einrichtung (12) und dem Teilnehmer-Host;
Empfangen einer zu einem ersten Netzdienst (20') gehörigen ersten Dienstzugangsanforderung an der Gateway-Einrichtung (12), wobei die erste Dienstzugangsanforderung zu jedem Zeitpunkt während der laufenden Teilnehmernetzsitzung empfangen wird;
Identifizieren der ersten Dienstzugangsanforderung als von dem Teilnehmer stammend;
Zugriff auf das Teilnehmerprofil in Reaktion auf den Empfang der ersten Dienstzugangsanforderung;
Feststellen, anhand der teilnehmerspezifischen Netzdienst-Tunnelungsanforderungen in dem Teilnehmerprofil, auf das zugegriffen wurde, ob der erste Netzdienst (20') eine teilnehmerspezifischen Tunnelungsanforderung hat; und
Schaffen eines ersten Tunnels (32), wenn festgestellt wird, dass das Teilnehmerprofil den ersten Tunnel erfordert, wobei der erste Tunnel (32) einen ersten Endpunkt an der Gateway-Einrichtung und einen zweiten Endpunkt an dem ersten Netzdienst hat,
**dadurch gekennzeichnet, dass** die Gateway-Einrichtung (12) den ersten Netzdienst (20) dahingehend täuscht, dass er glaubt, dass sich der Tunnel zu einem Endpunkt am Teilnehmer-Host (14) erstreckt, indem Ursprungsadressen in Paketen, die von dem Teilnehmer-Host (14) kommen, und Zieladressen in Paketen, die von dem ersten Netzdienst (20') kommen, vertauscht werden.

2. Verfahren nach Anspruch 1, bei dem zum Speichern eines Teilnehmerprofils das Speichern mindestens eines Parameters gehört, der aus der aus der Netzzugangskennung, einem Benutzer-/Teilnehmernamen und einem Benutzer/Teilnehmerpasswort bestehenden Gruppe ausgewählt ist.

3. Verfahren nach Anspruch 1 oder Anspruch 2, bei dem ferner festgestellt wird, ob bereits ein erster Tunnel zwischen der Gateway-Einrichtung (12) und dem ersten Netzdienst (20') existiert, bevor der Tunnel zwischen der Gateway-Einrichtung (12) und dem ersten Netzdienst (20') geschaffen wird.

4. Verfahren nach einem der vorhergehenden Ansprüche, bei dem mehr als ein durch die Gateway-Einrichtung (12) auf das Kommunikationsnetz zugreifender Teilnehmer gleichzeitig Datenpakete über den ersten Tunnel (32) zu dem ersten Netzdienst (20') übertragen kann.

5. Verfahren nach einem der vorhergehenden Ansprüche, das ferner die folgenden Schritte umfasst:
Empfangen einer zu einem zweiten Netzdienst (20") gehörigen zweiten Dienstzugangsanforderung an der Gateway-Einrichtung (12), wobei die zweite Dienstzugangsanforderung zu jedem Zeitpunkt während einer laufenden Teilnehmernetzsitzung empfangen wird;
Identifizieren der zweiten Dienstzugangsanforderung als von dem Teilnehmer (14) stammend;
Zugriff auf das Teilnehmerprofil in Reaktion auf den Empfang der zweiten Dienstzugangsanforderung;
Feststellen, anhand der teilnehmerspezifischen Netzdienst-Tunnelungsanforderungen in dem Teilnehmerprofil, auf das zugegriffen wurde, ob der zweite Netzdienst eine teilnehmerspezifischen Tunnelungsanforderung hat; und
Schaffen eines zweiten Tunnels, wenn festgestellt wird, dass das Teilnehmerprofil den zweiten Tunnel erfordert, wobei der zweite Tunnel einen ersten Endpunkt an der Gateway-Einrichtung (12) und einen zweiten Endpunkt an dem zweiten Netzdienst (20") hat.

6. Verfahren nach Anspruch 5, bei dem ferner festgestellt wird, ob bereits ein zweiter Tunnel zwischen der Gateway-Einrichtung (12) und dem zweiten Netzdienst (20") existiert, bevor der Tunnel (36) zwischen der Gateway-Einrichtung (12) und dem zweiten Netzdienst (20") geschaffen wird.

7. Verfahren nach Anspruch 5 oder Anspruch 6, bei dem der zweite Tunnel (36) gleichzeitig mit dem Betrieb des ersten Tunnels (32) funktioniert.

8. Verfahren nach Anspruch 5, bei dem mehr als ein durch die Gateway-Einrichtung (12) auf das Kommunikationsnetz zugreifender Teilnehmer gleichzeitig Datenpakete über den ersten Tunnel (32) zu dem ersten Netzdienst (20') und über den zweiten Tunnel (36) zu dem zweiten Netzdienst (20") übertragen kann.

9. System zur dynamischen Schaffung eines Tunnels in einem Kommunikationsnetz, um einem Teilnehmer-Host den Zugang zu einem Zielnetz zu ermöglichen, mit:
einer Speichervorrichtung, die ein Teilnehmerprofil speichert, wobei das Teilnehmerprofil teilnehmerspezifische Netzdienst-Tunnelungsanforderungen für mehrere Netzdienste enthält, die dem Teilnehmer zur Verfügung stehen, einschließlich Informationen zum Identifizieren der Tunnelanforderungen für jeden dieser Dienste;
Mitteln zum Herstellen einer Teilnehmernetzsitzung zwischen einer Gateway-Einrichtung (12) und dem Teilnehmer-Host (14);
Mitteln zum Empfangen einer zu einem ersten Netzdienst (20') gehörigen ersten Dienstzugangsanforderung an der Gateway-Einrichtung (12) zu jedem Zeitpunkt während einer laufenden Teilnehmernetzsitzung;
Mitteln zum Identifizieren der ersten Dienstzugangsanforderung als von dem Teilnehmer stammend; Mitteln zum Zugreifen auf das Teilnehmerprofil in Reaktion auf den Empfang der ersten Dienstzugangsanforderung;
Mitteln zum Feststellen, anhand der teilnehmerspezifischen Netzdienst-Tunnelungsanforderungen in dem Teilnehmerprofil, auf das zugegriffen wurde, ob der erste Netzdienst (20') eine teilnehmerspezifische Tunnelungsanforderung hat; und
Mitteln zum Schaffen eines ersten Tunnels (32), wenn festgestellt wird, dass das Teilnehmerprofil den ersten Tunnel erfordert, wobei der erste Tunnel einen ersten Endpunkt an der Gateway-Einrichtung (12) und einen zweiten Endpunkt an dem ersten Netzdienst (20') hat,
**dadurch gekennzeichnet, dass** die Gateway-Einrichtung (12) betrieben werden kann, um den ersten Netzdienst (20') dahingehend zu täuschen, dass er glaubt, dass sich der Tunnel zu einem Endpunkt an dem Teilnehmer-Host (14) erstreckt, indem Ursprungsadressen in Paketen, die von dem Teilnehmer (14) kommen, und Zieladressen in Paketen, die von dem ersten Netzdienst (20') kommen, vertauscht werden.

10. System nach Anspruch 9, ferner mit Mitteln zum Feststellen, ob bereits ein erster Tunnel (32) zwischen der Gateway-Einrichtung (12) und dem ersten Netzdienst (20') existiert, bevor der Tunnel (32) zwischen der Gateway-Einrichtung (12) und dem ersten Netzdienst (20') geschaffen wird.

11. System nach Anspruch 9, ferner mit:
Mitteln zum Empfangen einer zu einem zweiten Netzdienst (20") gehörigen zweiten Dienstzugangsanforderung an der Gateway-Einrichtung (12), wobei die zweite Dienstzugangsanforderung des Teilnehmers zu jedem Zeitpunkt während einer laufenden Teilnehmernetzsitzung empfangen wird;
Mitteln zum Identifizieren der zweiten Dienstzugangsanforderung als von dem Teilnehmer stammend;
Mitteln zum Zugreifen auf das Teilnehmerprofil in Reaktion auf den Empfang der zweiten Dienstzugangsanforderung;
Mitteln zum Feststellen, anhand der teilnehmerspezifischen Netzdienst-Tunnelungsanforderungen in dem Teilnehmerprofil, auf das zugegriffen wurde, ob der zweite Netzdienst eine teilnehmerspezifische Tunnelungsanforderung hat; und
Mitteln zum Schaffen eines zweiten Tunnels (36), wenn festgestellt wird, dass das Teilnehmerprofil den zweiten Tunnel erfordert, wobei der zweite Tunnel (36) einen ersten Endpunkt an der Gateway-Einrichtung (12) und einen zweiten Endpunkt an dem zweiten Netzdienst (20") hat.

12. Gateway-Einrichtung (12), die dynamisch einen Tunnel in einem Kommunikationsnetz schafft, um einem Teilnehmer-Host den Zugang zu einem Zielnetz zu ermöglichen, mit:
Mitteln zum Herstellen einer Teilnehmernetzsitzung zwischen der Gateway-Einrichtung (12) und dem Teilnehmer-Host (14) ;
einem Prozessor, der von einem Teilnehmer zu jedem Zeitpunkt während einer laufenden Teilnehmernetzsitzung eine zu einem Netzdienst (20') gehörige Dienstzugangsanforderung empfängt und die Dienstzugangsanforderung als von dem Teilnehmer (14) stammend identifiziert;
einer Datenbank, auf die der Prozessor zugreift und in der ein Teilnehmerprofil gespeichert ist, das teilnehmerspezifische Netzdienst-Tunnelungsanforderungen für mehrere Netzdienste enthält, die dem Teilnehmer zur Verfügung stehen, einschließlich Informationen zum Identifizieren von Tunnelanforderungen für jeden dieser Dienste; und
einem von dem Prozessor implementierten Tunnelmanagementmodul, das während der laufenden Teilnehmernetzsitzung mit der Datenbank kommuniziert, um festzustellen, ob der Teilnehmer einen Tunnel (32) zum Zugang zu dem angeforderten Netzdienst erfordert, und wenn festgestellt wird, dass der Tunnel erforderlich ist, schafft das Tunnelmanagementmodul eine Dienstzugangssitzung zwischen der Netzwerkeinrichtung und dem Netzdienst,
**dadurch gekennzeichnet, dass** die Gateway-Einrichtung betrieben werden kann, um den ersten Netzdienst (20') dahingehend zu täuschen, dass er glaubt, dass sich der Tunnel zu einem Endpunkt an dem Teilnehmer-Host (14) erstreckt, indem Ursprungsadressen in Paketen, die von dem Teilnehmer-Host (14) kommen, und zieladressen in Paketen, die von dem ersten Netzdienst (20') kommen, vertauscht werden.

13. Gateway-Einrichtung nach Anspruch 12, ferner mit einem von dem Prozessor implementierten Sitzungsmanagementmodul, das mit der Datenbank kommuniziert, um die durch die Netzwerkeinrichtung bereitgestellte Netzzugangssitzung zu managen.

14. Gateway-Einrichtung nach Anspruch 12, bei der das Tunnelmanagementmodul feststellt, ob bereits ein Tunnel zwischen der Gateway-Einrichtung und dem Netzdienst existiert, bevor der Tunnel zwischen der Gateway-Einrichtung und dem Netzdienst geschaffen wird.

15. Gateway-Einrichtung nach Anspruch 12, bei der das Tunnelmanagementmodul in der Lage ist, mehr als eine Netzzugangssitzung für den gleichzeitigen Teilnehmerzugang zu mehr als einem Netzdienst zu schaffen.

16. Gateway-Einrichtung nach Anspruch 12, bei der das Tunnelmanagementmodul in der Lage ist, den gleichzeitigen Zugang zu der Netzzugangssitzung für mehr als einen Teilnehmer zu ermöglichen, die durch die Gateway-Einrichtung (12) auf das Kommunikationsnetz zugreifen.

17. Gateway-Einrichtung nach Anspruch 16, ferner mit einem von dem Prozessor implementierten Sitzungsmanagementmodul, das mit der Datenbank kommuniziert, um die gleichzeitige Netzzugangssitzung zu managen, die mehr als einem durch die Gateway-Einrichtung auf das Kommunikationsnetz zugreifenden Teilnehmer ermöglicht wird.

18. Gateway-Einrichtung nach Anspruch 16, bei der das Teilnehmerprofil teilnehmerspezifische Netzdienst-Tunnelungsanforderungen für mehrere Netzdienste definiert, auf die zuzugreifen der Teilnehmer berechtigt ist.

19. Gateway-Einrichtung nach Anspruch 18, bei der die teilnehmerspezifischen Netzdienst-Tunnelungsanforderungen vom Teilnehmer vordefiniert sind.

20. Gateway-Einrichtung nach Anspruch 18, bei der die teilnehmerspezifischen Netzdienst-Tunnelungsanforderungen vom Administrator der Gateway-Einrichtung vordefiniert sind.

## Revendications

1. Procédé pour créer dynamiquement un tunnel dans un réseau de communications pour fournir un accès d'hôte d'abonné à un service de réseau, comprenant :
le stockage d'un profil d'abonné dans une base de données de réseau, dans lequel le profil d'abonné comprend des conditions de tunnellisation de services de réseau spécifiques à l'abonné pour une pluralité de services de réseau (20', 20'') qui sont disponibles pour l'abonné, comprenant des informations pour identifier des conditions de tunnel pour chacun de ces services ;
l'établissement d'une session réseau d'abonné entre un dispositif de passerelle (12) et l'hôte d'abonné ;
la réception au niveau du dispositif de passerelle (12) d'une première requête d'accès au service associée à un premier service de réseau (20'), la première requête d'accès au service étant reçue à tout moment durant la session réseau d'abonné en cours ;
l'identification de la première requête d'accès au service comme provenant de l'abonné;
l'accès au profil d'abonné en réponse à la réception de la première requête d'accès au service ;
la détermination, sur la base des conditions de tunnellisation de services de réseau spécifiques à l'abonné dans le profil d'abonné accédé, pour savoir si le premier service de réseau (20') a une condition de tunnellisation spécifique à l'abonné ; et
la création d'un premier tunnel (32) si une détermination est effectuée selon laquelle le profil d'abonné requiert le premier tunnel, dans lequel le premier tunnel (32) a un premier point limite au niveau du dispositif de passerelle et un second point limite au niveau du premier service de réseau,
**caractérisé en ce que** le dispositif de passerelle (12) dupe le premier service de réseau (20') en lui faisant croire que le tunnel s'étend jusqu'à un point limite au niveau de l'hôte d'abonné (14) en changeant des adresses sources à l'intérieur de paquets provenant de l'hôte d'abonné (14) et des adresses de destination à l'intérieur de paquets provenant du premier service de réseau (20').

2. Procédé selon la revendication 1, dans lequel le stockage d'un profil d'abonné comprend le stockage d'au moins un paramètre choisi dans le groupe se composant de l'identifiant d'accès au réseau, d'un nom d'utilisateur/abonné et d'un mot de passe d'utilisateur/abonné.

3. Procédé selon la revendication 1 ou la revendication 2, comprenant en outre la détermination de savoir si un premier tunnel entre le dispositif de passerelle (12) et le premier service de réseau (20') préexiste avant la création du tunnel entre le dispositif de passerelle (12) et le premier service de réseau (20').

4. Procédé selon l'une quelconque des revendications précédentes, dans lequel plus d'un abonné accédant au réseau de communication par l'intermédiaire du dispositif de passerelle (12) peut transmettre simultanément des paquets de données au premier service de réseau (20') via le premier tunnel (32).

5. Procédé selon l'une quelconque des revendications précédentes, dans lequel le procédé comprend en outre :
la réception au niveau du dispositif de passerelle (12) d'un seconde requête d'accès au service associée à un second service de réseau (20''), la seconde requête d'accès au service étant reçue à tout moment durant une session réseau d'abonné en cours ;
l'identification de la seconde requête d'accès au service comme provenant de l'abonné (14) ;
l'accès au profil d'abonné en réponse à la réception de la seconde requête d'accès au service ;
la détermination, sur la base des conditions de tunnellisation de services de réseau spécifiques à l'abonné dans le profil d'abonné accédé, de savoir si le second service de réseau a une exigence de tunnellisation spécifique à l'abonné ; et
la création d'un second tunnel si une détermination est effectuée selon laquelle le profil d'abonné requiert le second tunnel, dans lequel le second tunnel a un premier point limite au niveau du dispositif de passerelle (12) et un second point limite au niveau du second service de réseau (20'').

6. Procédé selon la revendication 5, comprenant en outre la détermination de savoir si un second tunnel entre le dispositif de passerelle (12) et le second service de réseau (20") préexiste avant la création du tunnel (36) entre le dispositif de passerelle (12) et le second service de réseau (20'').

7. Procédé selon la revendication 5 ou la revendication 6, dans lequel le second tunnel (36) est fonctionnel simultanément avec le fonctionnement du premier tunnel (32).

8. Procédé selon la revendication 5, dans lequel plus d'un abonné accédant au réseau de communication par l'intermédiaire du dispositif de passerelle (12) peut transmettre simultanément des paquets de données au premier service de réseau (20') via le premier tunnel (32) et au second service de réseau (20") via le second tunnel (36).

9. Système pour créer dynamiquement un tunnel dans un réseau de communications pour fournir un accès d'hôte d'abonné à un réseau de destination, comprenant :
un dispositif de stockage qui stocke un profil d'abonné, dans lequel le profil d'abonné comprend des conditions de tunnellisation de services de réseau spécifiques à l'abonné pour une pluralité de services de réseau qui sont disponibles pour l'abonné, comprenant des informations pour identifier des conditions de tunnel pour chacun de ces services ;
des moyens pour établir une session réseau d'abonné entre un dispositif de passerelle (12) et l'hôte d'abonné (14) ;
des moyens pour recevoir au niveau du dispositif de passerelle (12) une première requête d'accès au service associée à un premier service de réseau (20') à tout moment durant une session réseau d'abonné en cours ;
des moyens pour identifier la première requête d'accès au service comme provenant de l'abonné ;
des moyens pour accéder au profil d'abonné en réponse à la réception de la première requête d'accès au service ;
des moyens pour déterminer, sur la base des exigences de tunnellisation de services de réseau spécifiques à l'abonné dans le profil d'abonné accédé, si le premier service de réseau (20') a une condition de tunnellisation spécifique à l'abonné ; et
des moyens pour créer un premier tunnel (32) si une détermination est effectuée selon laquelle le profil d'abonné requiert le premier tunnel, dans lequel le premier tunnel a un premier point limite au niveau du dispositif de passerelle (12) et un second point limite au niveau du premier service de réseau (20'),
**caractérisé en ce que** le dispositif de passerelle (12) est exploitable pour duper le premier service de réseau (20') en le faisant croire que le tunnel s'étend jusqu'à un point limite au niveau de l'hôte d'abonné (14) en changeant des adresses sources à l'intérieur de paquets provenant de l'hôte d'abonné (14) et des adresses de destination à l'intérieur de paquets provenant du premier service de réseau (20').

10. Système selon la revendication 9, comprenant en outre un moyen pour déterminer si un premier tunnel (32) entre le dispositif de passerelle (12) et le premier service de réseau (20') préexiste avant la création du tunnel (32) entre le dispositif de passerelle (12) et le premier service de réseau (20).

11. Système selon la revendication 9, comprenant en outre :
des moyens pour recevoir au niveau du dispositif de passerelle (12) une seconde requête d'accès au service associée à un second service de réseau (20''), la seconde requête d'accès au service d'abonné étant reçue à tout moment durant une session réseau d'abonné en cours ;
des moyens pour identifier la seconde requête d'accès au service comme provenant de l'abonné ;
des moyens pour accéder au profil d'abonné en réponse à la réception de la seconde requête d'accès au service ;
des moyens pour déterminer, sur la base des exigences de tunnellisation de services de réseau spécifiques à l'abonné dans le profil d'abonné accédé, si le second service de réseau a une exigence de tunnellisation spécifique à l'abonné ; et
des moyens pour créer un second tunnel (36) si une détermination est effectuée selon laquelle le profil d'abonné requiert le second tunnel, dans lequel le second tunnel (36) a un premier point limite au niveau du dispositif de passerelle (12) et un second point limite au niveau du second service de réseau (20").

12. Dispositif de passerelle (12) qui crée dynamiquement un tunnel dans un réseau de 5 communications pour fournir un accès d'hôte d'abonné à un réseau de destination, comprenant :
des moyens pour établir une session réseau d'abonné entre le dispositif de passerelle (12) et l'hôte d'abonné (14) ; et
un processeur qui reçoit d'un abonné, à tout moment durant une session réseau d'abonné en cours, une requête d'accès au service associée à un service de réseau (20') et identifie la requête d'accès au service comme provenant de l'abonné (14) ;
une base de données accédée par le processeur qui stocke un profil d'abonné qui comprend des conditions de tunnellisation de services de réseau spécifiques à l'abonné pour une pluralité de services de réseau qui sont disponibles pour l'abonné, comprenant des informations pour identifier des conditions de tunnel pour chacun de ces services ;
un module de gestion de tunnel mis en oeuvre par le processeur qui communique avec la base de données, durant la session réseau d'abonné en cours, pour déterminer si l'abonné requiert un tunnel (32) pour l'accès au service de réseau demandé et, si une détermination est effectuée selon laquelle le tunnel est requis, le module de gestion de tunnel crée une session d'accès au service entre le dispositif de réseau et le service de réseau,
**caractérisé en ce que** le dispositif de passerelle est exploitable pour duper le premier service de réseau (20') en le faisant croire que le tunnel s'étend jusqu'à un point limite au niveau de l'hôte d'abonné (14) en changeant des adresses sources à l'intérieur de paquets provenant de l'hôte d'abonné (14) et des adresses de destination à l'intérieur de paquets provenant du premier service de réseau (20').

13. Dispositif de passerelle selon la revendication 12, comprenant en outre un module de gestion de session mis en oeuvre par le processeur qui communique avec la base de données pour gérer la session d'accès au réseau par le dispositif de réseau.

14. Dispositif de passerelle selon la revendication 12, dans lequel le module de gestion de tunnel détermine si un tunnel entre le dispositif de passerelle et le service de réseau préexiste avant la création du tunnel entre le dispositif de passerelle et le service de réseau.

15. Dispositif de passerelle selon la revendication 12, dans lequel le module de gestion de tunnel est capable de créer plus d'une session d'accès au réseau pour un accès d'abonné simultané à plus d'un service de réseau.

16. Dispositif de passerelle selon la revendication 12, dans lequel le module de gestion de tunnel est capable de fournir un accès simultané à la session d'accès au réseau à plus d'un abonné accédant au réseau de communication par l'intermédiaire du dispositif de passerelle (12).

17. Dispositif de passerelle selon la revendication 16, comprenant en outre un module de gestion de session mis en oeuvre par le processeur qui communique avec la base de données pour gérer la session d'accès au réseau simultanée fournie à plus d'un abonné accédant au réseau de communication par l'intermédiaire du dispositif de passerelle.

18. Dispositif de passerelle selon la revendication 16, dans lequel le profil d'abonné définit des conditions de tunnellisation de services de réseau spécifiques à l'abonné pour une pluralité de services de réseau auxquels l'abonné a été autorisé à accéder.

19. Dispositif de passerelle selon la revendication 18, dans lequel les conditions de tunnellisation de services de réseau spécifiques à l'abonné sont prédéfinies par l'abonné.

20. Dispositif de passerelle selon la revendication 18, dans lequel les conditions de tunnellisation de services de réseau spécifiques à l'abonné sont prédéfinies par l'administrateur du dispositif de passerelle.
